# EUROPEAN PATENT SPECIFICATION

(11) **EP 4 519 622 B1**
(45) Date of publication and mention of the grant of the patent: **19.11.2025**
(21) Application number: 23725161.6
(22) Date of filing: 04.05.2023
(51) Int. Cl.: C04B 7/43, C04B 7/44, C04B 7/47, F27B 7/20, F27B 7/36, F27B 7/38, F27D 17/10, F27D 17/30

(54) **APPARATUS AND METHOD FOR MANUFACTURING A PRODUCT**
VORRICHTUNG UND VERFAHREN ZUR HERSTELLUNG EINES PRODUKTS
APPAREIL ET PROCÉDÉ DE FABRICATION D'UN PRODUIT

(30) Priority: 05.05.2022 EP 22171826
(43) Date of publication of application: 12.03.2025
(73) Proprietor: Refractory Intellectual Property GmbH & Co. KG, 1100 Wien (AT)
(72) Inventor: CANOSA, Celso Carlos, Lisboa (PT); GRADENEGGER, Christian, 8700 Leoben (AT)
(74) Representative: Eibel, Anna
(86) International application number: PCT/EP2023/061797
(87) International publication number: WO 2023/213939

(56) References cited:
- EP-A2- 1 037 005
- US-A1- 2021 198 142

## Description

The present disclosure concerns an apparatus for manufacturing a product from a raw material, wherein the apparatus comprises a rotary kiln having a first rotary kiln end and a second rotary kiln end and a cooling unit which is connected to the second rotary kiln end, wherein a process direction is provided leading through the rotary kiln (in the direction) from the first rotary kiln end to the second rotary kiln end and further through the cooling unit. In the apparatus disclosed herein, the cooling unit is configured to transport the product in the process direction through the cooling unit for cooling the product. The rotary kiln comprises a burning unit at the second rotary kiln end, which is configured to receive a flammable material and an ignition gas to create heat inside the rotary kiln and to produce a combustion gas containing carbon dioxide. In the apparatus disclosed herein, the rotary kiln is configured to transport raw material received at the first rotary kiln end in the process direction towards the second rotary kiln end and, by using the heat, to transform the raw material into the product and into a resigning gas comprising carbon dioxide.

Furthermore, the present disclosure concerns a method for producing a product from a raw material, wherein a process direction is provided, the process direction leading through a rotary kiln from a first rotary kiln end to a second rotary kiln end and further through a cooling unit being connected to the second rotary kiln end, said method comprising the following steps:
igniting in a burning unit located at the second rotary kiln end a flammable material with an ignition gas, the ignition gas comprising at least 50 vol% of oxygen, to create heat inside the rotary kiln and to produce a combustion gas containing carbon dioxide;
receiving said raw material at the first rotary kiln end and transporting said raw material in the process direction towards the second rotary kiln end;
manufacturing said product inside the rotary kiln by sintering and/or
calcining the raw material by using the heat, wherein a resigning gas comprising carbon dioxide degases from the raw material;
transporting the product into and through the cooling unit in the process direction;
cooling the product inside the cooling unit by using a cooling gas; and removing the product from the cooling unit.

According to the state of the art, a rotary kiln can be used for producing a sintered and/or calcined product from a raw material. The reaction can be performed by using the heat generated by a burning unit. In the burning unit, a flammable material, e.g. a flammable gas, is ignited by an ignition gas to produce heat inside the rotary kiln. Air, which contains about 20 vol% oxygen, has previously been used as ignition gas for the combustion of the flammable material by serving as an oxidation agent. In a typical process, the raw material is inserted into a first rotary kiln end and is transported along a process direction towards a second rotary kiln end (i.e. towards the burning unit, if the burning unit is located at the second rotary kiln end), while being sintered and/or calcined to a product. The product exits the rotary kiln at the second rotary kiln end.

To cool down the product, a cooling unit is typically arranged at the second rotary kiln end. The cooling unit can be configured to transport the hot product through the cooling unit. A cooling gas which is transported over the product can be used to cool said product. Above mentioned process direction (leading from the first rotary kiln end to the second rotary kiln end) can therefore be extended from the second rotary kiln end through the cooling unit, wherein the product moves through the cooling unit in the process direction.

WO 2019/211202 A1 and WO 2019/211196 A1 disclose the use of oxygen as ignition gas for producing a cement clinker in a rotary kiln. According to these documents, the produced cement clinker is cooled with air in a clinker cooler, which is blown onto the produced cement clinker in a cross flow.

WO 2019/211202 A1 further describes the use of preheated air, which was used as cooling gas and therefore was preheated due to heat exchange while cooling the product, for preheating the cement raw material before entering a calcinatory and the rotary kiln. EP 1 037 005 A2 describes a kiln for producing clinker in which oxygen is injected into a rotary kiln and in which air is blown in a countercurrent flow or in cross flow over the clinkers for cooling. Similarly, US 4,372,784 relates to the production of a cement clinker in a rotary kiln, wherein the burnt clinker is cooled by air blown by fans through the cooler in cross flow, see column 5, lines 60-62 and Fig. 4.

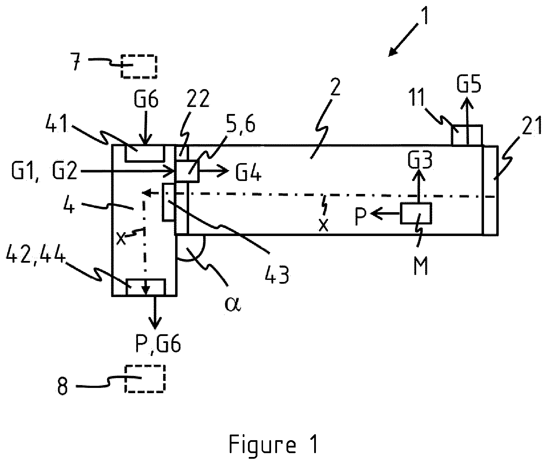

US 5,882,190 also relates to the production of cement clinker. The cement clinker is cooled by cooling air blown across the grate of a cement clinker cooler, wherein the cooling air then flows into the rotary kiln, see column 4, line 62 and Fig. 1.

Cooling in a countercurrent flow or in cross flow is commonly performed because it is expected to provide fast and efficient cooling and provides preheated air at the second rotary kiln end, which air can be used as part of the ignition gas, thereby saving energy.

During the sintering and/or calcination process, typically a large amount of carbon dioxide (CO₂) degases as resigning gas from the raw material, if a raw material is used which releases carbon dioxide upon heat treatment, such as an inorganic carbonate. To avoid pollution of the environment, it is desired to collect, i.e. capture, the carbon dioxide and to reuse it for other applications, as disclosed in WO 2019/211196 A1. For this purpose, it is desired that the carbon dioxide can be collected from the process in a form as pure as possible and without being contaminated with other gases.

Inside the rotary kiln, the resigning gas, comprising carbon dioxide and being released from the raw material, mixes with the combustion gas, formed in the burning unit from the reaction of the flammable material, preferably a flammable gas, with the ignition gas. Herein, an "exhaust gas" is defined, comprising the resigning gas and the combustion gas.

WO 2019/211202 A1 suggests using oxygen as an ignition gas, which reacts with a flammable gas to form a combustion gas comprising carbon dioxide and water and thereby the CO₂ concentration in the exhaust gas is increased.

WO 2019/211202 A1 further mentions a separation of the gas stream in the kiln from its surrounding, wherein this separation is performed mechanically by using a dividing wall or a separation device.

It is an object of the present apparatus and method to obtain an exhaust gas with a high carbon dioxide concentration while producing a sinter and/or calcination product in a rotary kiln and to efficiently capture said exhaust gas.

This object is solved by the apparatus comprising a gas outlet configured to remove an exhaust gas comprising the resigning gas and the combustion gas from the rotary kiln and by the cooling unit being configured to transport a cooling gas in the process direction over the product, wherein the cooling unit is a rotary cooler.

Furthermore, the object is solved by removing an exhaust gas comprising the combustion gas and the resigning gas, from the rotary kiln via a gas outlet and by directing the cooling gas over the product in the process direction.

According to the present disclosure, a process direction is defined to lead (in the direction) from the first rotary kiln end to the second rotary kiln end and further to the cooling unit connected to the second rotary kiln end. The raw material is transported in the process direction from the first rotary kiln end through the rotary kiln to the second rotary kiln end while being sintered and/or calcined to the product.

During the process, a high CO₂ concentration in the exhaust gas is obtained by a combination of
(i) using a flammable material and an ignition gas producing heat and CO₂, and
(ii) cooling the product in a cooling unit using a cooling gas which is directed through the cooling unit in the process direction, i.e. in the same direction as the material flow.

It has surprisingly been shown that directing the cooling gas in the process direction not only allows for a rapid and efficient cooling of the product but also prevents the cooling gas, such as air, from entering the rotary kiln. Therefore, it is ensured that the exhaust gas formed in the rotary kiln is not contaminated with the cooling gas, resulting in a high purity of the exhaust gas and thus in a high concentration of carbon dioxide in the exhaust gas.

Therefore, in the present disclosure, the gas present in the rotary kiln is prevented from mixing with the gas present in the cooling unit, i.e. the gas present in the rotary kiln is separated from the gas present in the cooling unit. Herein, the term "gas" is to be understood as comprising a mixture of one or more types of gaseous molecules.

The separation of the gas in the rotary kiln from the gas in the cooling unit is herein also called "separation of the gas atmospheres of the rotary kiln and the cooling unit" or "separation of the gas atmospheres".

It is particularly advantageous that due to directing the cooling gas in the process direction, the use of a mechanical separation part to separate the gas in the rotary kiln from the gas in the cooling unit is not mandatory in the apparatus and method disclosed herein. This allows for a simpler installation and less operational interruptions due to deficient mechanical separation parts such as dividing walls or separation devices. Thus, a more robust process is achieved. Even in case a mechanical separation is used, directing the cooling gas in the process direction leads to an improved separation of the gas atmospheres, such as in cases when the mechanical separation opens (e.g. when a product passes through or in case of any failure).

The transport of the raw material through the rotary kiln is performed by rotation of the rotary kiln, wherein it is preferred that the rotary kiln is inclined downwards from the first rotary kiln end to the second rotary kiln end. This ensures efficient transport of the raw material through the rotary kiln and allows a better heat distribution over the raw material.

A burning unit is located at the second rotary kiln end and allows for the generation of heat for sintering and/or calcination of the raw material.

The heat is generated by the burning unit by igniting a flammable material, such as a flammable gas, with an ignition gas. When igniting a flammable material with an ignition gas, a flame can be generated, which produces heat. If an ignition gas comprising at least 50 vol% of oxygen is used, it is ensured that the combustion gas comprises a high amount of carbon dioxide. The combustion of a flammable material with an ignition gas comprising at least 50 vol% of oxygen is herein referred to as "oxyfuel process".

Preferably, the ignition gas comprises at least 80 vol% of oxygen, more preferably at least 90 vol% of oxygen and even more preferably at least 95 vol% of oxygen. By increasing the oxygen content in the ignition gas, the carbon dioxide concentration in the exhaust gas can be increased. Preferably, pure oxygen is used as ignition gas. The oxygen can be provided as liquid oxygen. If the ignition gas does not consist of pure oxygen, the portion of the ignition gas not being oxygen may comprise nitrogen (N₂).

Herein, the flammable material preferably comprises one or more hydrocarbon compounds. The one or more hydrocarbon compounds can be selected from the group consisting of methane, ethane, propane, butane and/or mixtures thereof. The flammable material may also comprise or consist of coke and/or crude oil. As a source for methane, natural gas may be used. Natural gas contains mainly methane (CH₄) but may also contain other compounds such as carbon dioxide (CO₂), nitrogen (N₂) or hydrogen (H₂), wherein hydrogen may be present in an amount of up to 20 vol% in the natural gas.

Preferably, natural gas or a mixture of natural gas and propane is used as flammable material. Most preferably, the flammable material essentially consists of natural gas.

If the flammable material comprises one or more hydrocarbon compounds, the ignition gas and the flammable material exothermically react to a combustion gas comprising carbon dioxide and water (H₂O). The term "exothermically" means that heat is generated in this reaction. The combustion gas may comprise small amounts, i.e. less than 10 vol%, preferably less than 5 vol%, of other gases such as nitrogen (N₂).

One or more booster burner units can be provided at the rotary kiln in addition to the burning unit to provide more than one heat source inside the rotary kiln. Using more than one heat source can lead to a more uniform distribution of the heat inside the rotary kiln. **In** each booster burner unit, the flammable material can be ignited with the ignition gas. Preferably, said one or more booster burner units are located at the rotary kiln hood, wherein the "kiln hood" is to be understood as the part of the rotary kiln being closer to the second rotary kiln end than to the first rotary kiln end. Like the burning unit, each of the one or more booster burner units generates heat by igniting the flammable material with the ignition gas and therefore, the one or more booster burner units allow a good distribution of the heat generated inside the rotary kiln.

Herein, the raw material comprises one or more compounds producing CO₂ as resigning gas upon the influence of the heat. By using the heat, the raw material is transformed into the product and the resigning gas comprising or consisting of carbon dioxide. Preferably, the product is a sinter product. **In** this case, the raw material undergoes a sintering reaction to produce a sinter product. **It** is also possible that the raw material undergoes a calcination reaction to produce a calcination product. **If** a sinter product is to be obtained, the burning unit may be operated to achieve a temperature inside the rotary kiln of more than 2000 °C, for example 2400°C. If a calcination product is to be obtained, the burning unit may be operated to achieve a lower temperature inside the rotary kiln, for example between 400 °C and 1200°C, depending on the type of raw material. Preferably, a calcination temperature of 700 to 1000 °C may be used.

Preferably, the raw material comprises one or more inorganic carbonates. Heating an inorganic carbonate with the heat inside the rotary kiln leads to the formation of the corresponding inorganic oxide and gaseous carbon dioxide.

Said one or more inorganic carbonates may be selected from the group consisting of magnesium carbonate (MgCO₃), calcium carbonate (CaCO₃), magnesium-calcium carbonate, magnesium-calcium carbonate comprising magnesium oxide (MgO) and mixtures thereof. If magnesium-calcium carbonate comprising magnesium oxide is used as a raw material, the amount of magnesium oxide (MgO) may range from 1-30 wt%, preferably 20-30 wt%.

It is particularly preferred to use magnesium carbonate (MgCO₃) as raw material. Magnesium carbonate (MgCO₃) may herein also be referred to as "magnesite". When magnesium carbonate is used as a raw material, magnesium oxide (MgO) is formed as a sinter product, and gaseous carbon dioxide is produced as resigning gas. This has the advantageous effect that the resigning gas essentially consists of CO₂, thereby contributing to a high concentration of CO₂ in the exhaust gas.

According to the present disclosure, the exhaust gas comprises a high concentration of carbon dioxide, resulting from high concentrations of carbon dioxide in the resigning gas and in the combustion gas. Preferably, the amount of resigning gas is higher than the amount of combustion gas. This can be achieved by adjusting the amounts of the ignition gas and flammable material as well as the amount of raw material.

In the present disclosure, the amounts and composition of ignition gas, flammable material and raw material are preferably chosen to achieve a carbon dioxide content in the exhaust gas of at least 70 vol%. Even more preferably, the carbon dioxide content of the exhaust gas is at least 80 vol%, even more preferably at least 85 vol% and even more preferably at least 90 vol%.

A carbon dioxide content of the exhaust gas of at least 70 vol% ensures that no or only a minimum amount of purification steps are required after the exhaust gas has been extracted from the rotary kiln.

Apart from carbon dioxide, the exhaust gas can comprise one or more other gases selected from the group consisting of water (H₂O), nitrogen (N₂) and nitrogen oxide. A nitrogen oxide may be formed from thermal reactions of nitrogen with oxygen in the rotary kiln. Said nitrogen oxide may have a chemical formula of NOₓ, wherein x may range from 0.25 to 2.

The apparatus and method according to the present disclosure allow to extract the exhaust gas formed inside the rotary kiln in high purity. The exhaust gas is extracted from the rotary kiln via at least one gas outlet. For extracting the exhaust gas via the at least one gas outlet, one or more pumps may be used. Preferably, the at least one gas outlet is located at the first rotary kiln end or close to the first rotary kiln end. Locating the at least one gas outlet at the fist rotary kiln end is advantageous especially if the rotary kiln is inclined downwards from the first rotary kiln end to the second rotary kiln end. This allows an efficient collection of the exhaust gas which rises to the highest part of the rotary kiln, i.e. to the first rotary kiln end.

After removing the exhaust gas from the rotary kiln via the gas outlet, it can be transported via pipes to a purification unit to further purify the exhaust gas, e.g. to remove water and/or nitrogen and/or nitrogen oxide comprised in the exhaust gas in order to obtain purified carbon dioxide.

The carbon dioxide can be used for further applications, e.g. for the production of urea (carbonyl diamide, CO(NH₂)₂), or for the production of sodium carbonate (Na₂CO₃) via the Solvay process or for the production of carbohydrates via the Fischer-Tropsch process. The obtained carbon dioxide can also be liquified and stored on site, or it can be transported to on- or offshore storage reservoirs like depleted gas fields or saline aquifers.

The product produced in the rotary kiln is received by the cooling unit, e.g. via a product inlet of the cooling unit, and the product exits the cooling unit, e.g. via a product outlet of the cooling unit. The product is cooled in the cooling unit by directing the cooling gas in the process direction through the cooling unit, which allows an efficient separation of the atmospheres of the rotary kiln and the cooling unit, by preventing the cooling gas from entering the rotary kiln and from mixing with the exhaust gas. Thereby, it is possible to use a cheap and easily available gas as a cooling gas while still preserving the high CO₂ content of the exhaust gas. Preferably, the cooling gas is air. The air may be ambient air or synthetic air.

The cooling unit may comprise a cooling gas inlet and a cooling gas outlet. The cooling gas inlet receives the cooling gas into the cooling unit and the cooling gas outlet releases the heated cooling gas out of the cooling unit. The cooling unit is configured to direct the cooling gas in the process direction over the product.

For example, this can be achieved by installing one or more fans upstream and/or downstream of the cooling unit with respect to the process direction. The term "upstream of the cooling unit" refers to the area at the cooling gas inlet or the area above the cooling gas inlet or before the cooling gas inlet, with respect to the process direction. "Downstream of the cooling unit" refers to the area at the cooling gas outlet or the area below or after the cooling gas outlet, with respect to the process direction.

A fan may be located upstream of the cooling unit and another fan may be located downstream of the cooling unit. It is preferred that the fans generate a difference in the gas pressure between the cooling gas inlet and the cooling gas outlet, wherein at the cooling gas inlet, the gas pressure can be slightly lower than the gas pressure in the rotary kiln and at the cooling gas outlet, the gas pressure is lower than the gas pressure at the cooling gas inlet. Thus, the fans can be configured to generate an underpressure at the cooling gas outlet. For generating said underpressure at the cooling gas outlet, a fan located downstream of the cooling gas outlet can be configured to draw in the cooling gas.

Thereby, it is achieved that the cooling gas is directed through the cooling unit in the process direction. The pressure difference ensures that no or only a minor amount of cooling gas enters the rotary kiln and thus, a separation of the gas atmospheres of the rotary kiln and the cooling unit is achieved.

It is thus possible to control the flow of the cooling gas by using one or more fans for generating and controlling a gas pressure difference between the cooling gas inlet and the cooling gas outlet. This allows for a simple separation of the gas atmospheres of the rotary kiln and the cooling unit.

In addition to generating a gas pressure difference between the cooling gas inlet and the cooling gas outlet, one or more mechanical separation parts may be used to further enhance the separation of the gas atmospheres of the rotary kiln and the cooling unit. Said one or more mechanical separation parts can be located between the second rotary kiln end and the cooling unit, e.g. between the second rotary kiln end and the product inlet of the cooling unit. The mechanical separation parts may comprise or consist of refractory slide gate plates, which can be mechanically moved from a closed to an open position. When using refractory slide gate plates, the slide gate plates are moved from a closed to an open position to allow transporting the product formed inside the rotary kiln into the cooling unit. Even when the slide gate plates are in the open position, directing the cooling gas in the process direction leads to an improved separation of the gas atmospheres, and the high content of CO₂ in the exhaust gas is preserved.

Preferably, the cooling unit is connected to the second rotary kiln end via a connecting unit. The connecting unit can be located between the second rotary kiln end and the cooling unit. The connecting unit can be used to achieve a first cooling of the product and to allow the transport of the product into the cooling unit. If one or more fans are used to direct the cooling gas through the cooling unit in the process direction, a fan may be located upstream of the connecting unit with respect to the process direction and another fan may be located downstream of the cooling unit with respect to the process direction to generate a gas pressure difference as described above.

It is also possible to use the connecting unit in combination with one or more mechanical separation parts. If mechanical separation parts, such as slide gate plates, are used to further separate the gas atmospheres of the rotary kiln and the cooling unit, a mechanical separation part may be located between the second rotary kiln end and the connecting unit and/or between the connecting unit and the cooling gas inlet of the cooling unit.

According to the invention, the cooling unit is a rotary cooler. A rotary cooler has the advantage of allowing a good contact area between the sinter and/or calcination product and the cooling gas. This is achieved by rotating the cooler. The cooling rate inside the rotary cooler can be further increased by implementing inserts into the cooler. Suitable inserts for a rotary cooler are industrially available. These inserts can increase the cooling rate by further increasing the contact area and contact time between the product and the cooling gas.

The cooling unit and the rotary kiln can be configured in such way that the portion of the process direction leading through the cooling unit 4 and the portion of the process direction leading through the rotary kiln are arranged relative to each other at an angle of 90° or below 90°, preferably below 75°, even more preferably below 45°. Therefore, the cooling unit may be inclined backwards below the rotary kiln. This allows for the installation of the inventive apparatus even if limited space is available. Moreover, this arrangement is advantageous since the end of the cooling unit is brought into spatial proximity to the first rotary kiln end, which allows more efficient (re-)usage of the cooling gas, e.g. in a preheating unit.

A preheating unit can be installed upstream of (i.e. in the area before) the rotary kiln with respect to the process direction. Thereby, the preheating unit is located before the first rotary kiln end and can be used to preheat the raw material before the raw material is transported into the rotary kiln. Preferably, no calcination and/or sintering reaction takes place inside the preheating unit, which can be achieved by adjusting the temperature in the preheating unit to be below the calcination temperature of the raw material. It is particularly preferred to use heated cooling gas from the cooling unit for the preheating, as this allows to save energy. It is further particularly preferred to arrange the cooling gas outlet in spatial proximity to the preheating unit, to reduce the transport time of the heated cooling gas to the preheating unit. This allows for an efficient use of the heated cooling gas as an undesired cooling down of the heated cooling gas due to long transport times is avoided.

Figures 1 to 3 show exemplary, schematic, and non-limiting advantageous embodiments of the invention.

Figure 1 shows an apparatus according to a preferred embodiment of the present invention.

Figure 2 shows an apparatus according to another preferred embodiment of the present invention.

Figure 3 shows an apparatus according to yet another preferred embodiment of the present invention.

The apparatus 1 as shown in Figure 1 comprises a rotary kiln 2 with a first rotary kiln end 21 and a second rotary kiln end 22. The burning unit 5 is located at the second rotary kiln end 22. A cooling unit 4 which is connected to the second rotary kiln end 22 is provided. A process direction x leads through the rotary kiln 2 from the first rotary kiln end 21 to the second rotary kiln end 22 and further through the cooling unit 4.

The cooling unit 4 of the embodiment shown in Figure 1 is located downstream of the rotary kiln 2 with respect to the process direction x. The portion of the process direction x leading through the cooling unit 4 is by way of example inclined with respect to the portion of the process direction x leading through the rotary kiln 2 with an inclination angle α of ca. 90°. This can have the advantage of saving space and allowing an efficient transport of the product P through the cooling unit 4. The inclination angle may also be higher than 90°. In particular, the inclination angle may be up to 120°, or up to 150° or up to 180 °C. This arrangement has the advantage of being easy to set up, in case enough space is available.

The cooling unit 4 is configured as rotary cooler. The inclination angle α describes the longitudinal angle between the longitudinal axis of the rotary kiln 2 and the rotary cooler 4.

The rotary kiln 2 may be a rotary kiln with a length of 10 m to 200 m, preferably of 30 m to 160 m. The diameter of the rotary kiln may range from 0.5 m to 5 m, preferably from 1.5 to 4 m.

The rotary kiln may be operated continuously or discontinuously. Preferably, the rotary kiln is operated continuously over several days, weeks or months. A continuous operation allows for stable process conditions and stable product quality and also saves energy for heating up the rotary kiln.

The rotary kiln 2 is used for manufacturing a product P from a raw material M and comprises a burning unit 5 at the second rotary kiln end 22. The burning unit 5 is configured to receive a flammable material G1 and an ignition gas G2 comprising at least 50 vol% of oxygen to create heat 6 inside the rotary kiln 2 while producing a combustion gas G4.

The rotary kiln 2 is configured to transport raw material M received at the first rotary kiln end 21 in the process direction x towards the second rotary kiln end 22 and to transform the raw material M into the product P and into a resigning gas G3 comprising or consisting of carbon dioxide. Thus, inside the rotary kiln, the product P is formed from the raw material by sintering and/or calcining the raw material M by using the heat. During the sintering and/or calcination process, the resigning gas G3 comprising or consisting of carbon dioxide degases from the raw material M.

The apparatus 1 comprises a gas outlet 11 configured to remove an exhaust gas G5 comprising the resigning gas G3 and the combustion gas G4. The exhaust gas outlet 11 can be located near the first rotary kiln end 21.

The sinter and/or calcination product P formed in the rotary kiln 2 exits the rotary kiln 2 at the second rotary kiln end 22 and is transported into the cooling unit 4 for cooling.

The cooling unit 4 is configured to transport the product P in the process direction x and to transport a cooling gas G6 in the process direction x over the product P.

The cooling unit preferably comprises a cooling gas inlet 41, a cooling gas outlet 42 and a product inlet 43 and product outlet 44. The product inlet 43 connects the cooling unit 4 with the second rotary kiln end 22 of the cooling unit 4 and allows the transport of the product into the cooling unit. The cooling gas outlet 42 and the product outlet 44 may be combined, as shown in Figure 1. The cooling gas inlet 41 is configured to receive the cooling gas G6 into the cooling unit 4.

In the embodiment shown in Figure 1, a fan 7 is located upstream of the cooling gas inlet 41 of the cooling unit 4 and a fan 8 is located downstream of the cooling gas outlet 42 of the cooling unit 4 to generate a pressure difference for directing the cooling gas through the cooling unit 4.

The cooling unit 4 is a rotary cooler.

The raw material M can comprise one or more inorganic carbonates, preferably said one or more inorganic carbonates are selected from the group consisting of carbonate, magnesium-calcium carbonate, magnesium-calcium carbonate comprising magnesium oxide and mixtures thereof.

In a preferred embodiment, the flammable material G1 is natural gas. Therefore, the flammable material preferably comprises methane. The flammable material may also comprise other hydrocarbons such as ethane, propane, butane and/or mixtures thereof.

The ignition gas G2 comprises at least 50 vol% of oxygen and might even comprise at least 80 vol% oxygen, preferably at least 90 vol% oxygen, even more preferably at least 95 vol%, oxygen.

Preferably, the cooling gas G6 is air.

The exhaust gas G5 can be purified and/or liquified to obtain a liquid comprising or consisting essentially of carbon dioxide.

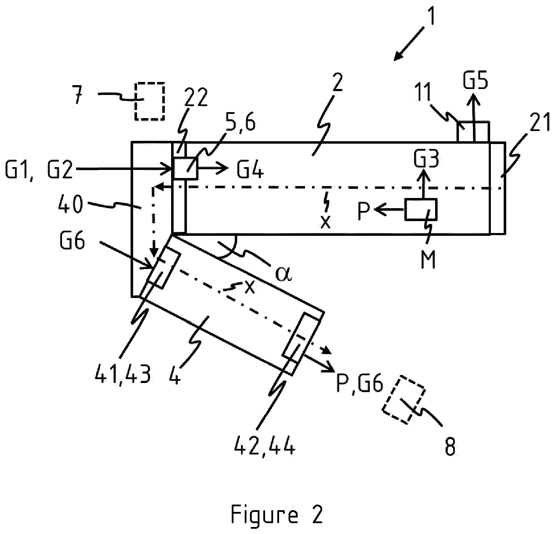

The apparatus 1 shown in Figure 2 comprises all the elements of the apparatus shown in Figure 1 and additionally comprises a connecting unit 40 between the rotary kiln 2 and the cooling unit 4.

The cooling unit 4 of the embodiment shown in Figure 2 is by way of example located below the rotary kiln 2 and inclined backwards from the rotary kiln 2 at an angle α of below 90°. Preferably said angle α is below 75°, even more preferably below 45° as shown in Figure 1. In the embodiment shown in Figure 2, the cooling gas inlet 41 and the product inlet 43 can be combined. In the embodiment shown in Figure 2, a fan 7 is located upstream of the connecting unit 40.

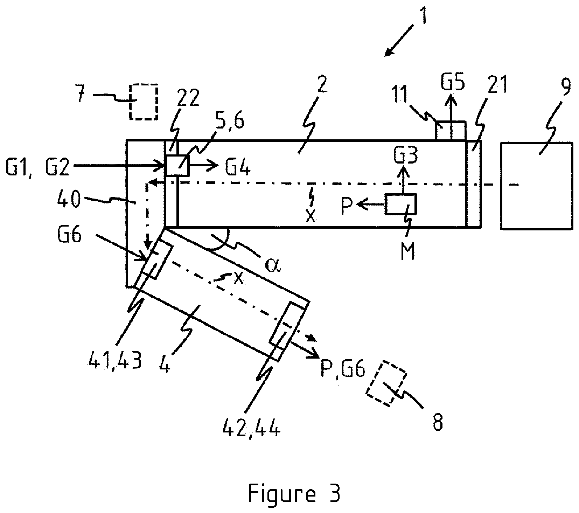

The apparatus 1 shown in Figure 3 comprises all the elements of the apparatus shown in Figure 2 and additionally comprises a preheating unit 9 located upstream of the rotary kiln 2 with respect to the process direction x.

The cooling gas outlet 42 can be connected to said preheating unit 9, the preheating unit 9 being configured to receive cooling gas from the cooling unit 4.

## Claims

1. Apparatus (1) for manufacturing a product (P) from a raw material (M), said apparatus (1) comprising
- a rotary kiln (2) having a first rotary kiln end (21) and a second rotary kiln end (22);
- a cooling unit (4) which is connected to the second rotary kiln end (22),
- wherein a process direction (x) is provided leading through the rotary kiln (2) from the first rotary kiln end (21) to the second rotary kiln end (22) and further through the cooling unit (4),
- wherein the cooling unit (4) is configured to transport the product (P) in the process direction (x) through the cooling unit for cooling the product (P),
- the rotary kiln (2) comprising a burning unit (5) at the second rotary kiln end (22), the burning unit (5) being configured to receive a flammable material (G1) and an ignition gas (G2) to create heat (6) inside the rotary kiln (2) and to produce a combustion gas (G4) containing carbon dioxide,
- the rotary kiln (2) being configured to transport raw material (M) received at the first rotary kiln end (21) in the process direction (x) towards the second rotary kiln end (22), and, by using the heat (6), to transform the raw material (M) into the product (P) and into a resigning gas (G3) comprising carbon dioxide,
- wherein the apparatus (1) comprises a gas outlet (11) configured to remove an exhaust gas (G5) comprising the resigning gas (G3) and the combustion gas (G4), from the rotary kiln (2),
- **characterized in that** the cooling unit (4) is configured to transport a cooling gas (G6) in the process direction (x) over the product (P), wherein the cooling unit is a rotary cooler.

2. Apparatus (1) according to claim 1, **characterized in that** the apparatus (1) further comprises one or more fans (7, 8) configured to transport the cooling gas (G6) through the cooling unit (4) in the process direction (x).

3. Apparatus (1) according to claim 1 or 2, **characterized in that** the cooling unit (4) is connected to the second rotary kiln end (22) via a connecting unit (40).

4. Apparatus (1) according to any one of claims 1 to 3, **characterized in that** the cooling unit (4) and the rotary kiln (2) are configured in such way that the portion of the process direction (x) leading through the cooling unit (4) and the portion of the process direction (x) leading through the rotary kiln are arranged relative to each other at an angle α of 90° or below 90°.

5. Apparatus (1) according to any one of claims 1 to 4, **characterized in that** a preheating unit (9) for preheating the raw material (M) is located upstream of the rotary kiln (2) with respect to the process direction (x).

6. Apparatus (1) according to claim 5, **characterized in that** the cooling unit (4) is connected to said preheating unit (9), said preheating unit (9) is configured to receive at least part of the cooling gas (G6) from the cooling unit (4).

7. Method for producing a product (P) from a raw material (M), wherein a process direction (x) is provided, the process direction (x) leading through a rotary kiln (2) from a first rotary kiln end (21) to a second rotary kiln end (22) and further through a cooling unit (4) being connected to the second rotary kiln end (22), wherein the cooling unit (4) is a rotary cooler, said method comprising the steps of:
- igniting in a burning unit (5) located at the second rotary kiln end (22) a flammable material (G1) with an ignition gas (G2), the ignition gas (G2) comprising at least 50 vol% of oxygen, to create heat (6) inside the rotary kiln (2) and to produce a combustion gas (G4) containing carbon dioxide,
- receiving said raw material at the first rotary kiln end (21) and transporting said raw material (M) in the process direction (x) towards the second rotary kiln end (22),
- manufacturing said product (P) inside the rotary kiln (2) by sintering and/or calcining the raw material (M) by using the heat (6), wherein a resigning gas (G3) comprising carbon dioxide degases from the raw material (M),
- transporting the product (P) into and through the cooling unit (4) in the process direction (x);
- cooling the product (P) inside the cooling unit (4) by using a cooling gas (G6);
- removing the product (P) from the cooling unit (4);
- wherein the method further comprises the step of removing an exhaust gas (G5) comprising the combustion gas (G4) and the resigning gas (G3), from the rotary kiln (2) via a gas outlet (11);
- wherein the cooling gas (G6) is directed over the product (P) in the process direction (x).

8. The method according to claim 7, **characterized in that** said raw material (M) comprises one or more inorganic carbonates, preferably said one or more inorganic carbonates are selected from the group consisting of magnesium carbonate, calcium carbonate, magnesium-calcium carbonate, magnesium-calcium carbonate comprising magnesium oxide and mixtures thereof.

9. The method according to claim 7 or 8, **characterized in that** the flammable material (G1) essentially consists of natural gas.

10. The method according to any one of claims 7 to 9, **characterized in that** the ignition gas (G2) comprises at least 80 vol% oxygen, preferably at least 90 vol% oxygen, even more preferably at least 95 vol% oxygen.

11. The method according to any one of claims 7 to 10, **characterized in that** said exhaust gas (G5) comprises at least 70 vol% carbon dioxide, preferably at least 80 vol%, more preferably at least 85 vol% carbon dioxide.

12. The method according to any one of claims 7 to 11, **characterized in that** said cooling gas (G6) is air.

13. The method according to any one of claims 7 to 12, **characterized in that** said raw material (M) is preheated in a preheating unit (6) located upstream of the rotary kiln (2) with respect to the process direction (x), preferably by using cooling gas (G6) from the cooling unit (4).

14. The method according to any one of claims 7 to 13, **characterized in that** said exhaust gas (G5) is liquified to obtain a liquid comprising or consisting essentially of carbon dioxide.

## Patentansprüche

1. Vorrichtung (1) zur Herstellung eines Produkts (P) aus einem Rohmaterial (M), wobei die Vorrichtung (1) Folgendes umfasst:
- einen Drehrohrofen (2) mit einem ersten Drehrohrofenende (21) und einem zweiten Drehrohrofenende (22);
- eine Kühleinheit (4), die mit dem zweiten Drehrohrofenende (22) verbunden ist,
- wobei eine Prozessrichtung (x) vorgesehen ist, die durch den Drehrohrofen (2) vom ersten Drehrohrofenende (21) zum zweiten Drehrohrofenende (22) und weiter durch die Kühleinheit (4) verläuft,
- wobei die Kühleinheit (4) konfiguriert ist, um das Produkt (P) in der Prozessrichtung (x) durch die Kühleinheit zu transportieren, um das Produkt (P) zu kühlen,
- wobei der Drehrohrofen (2) eine Brenneinheit (5) am zweiten Drehrohrofenende (22) umfasst, wobei die Brenneinheit (5) konfiguriert ist, um ein brennbares Material (G1) und ein Zündgas (G2) aufzunehmen, um Wärme (6) im Inneren des Drehrohrofens (2) zu erzeugen und ein Kohlendioxid enthaltendes Verbrennungsgas (G4) zu erzeugen,
- wobei der Drehrohrofen (2) konfiguriert ist, um am ersten Drehrohrofenende (21) aufgenommenes Rohmaterial (M) in Prozessrichtung (x) zum zweiten Drehrohrofenende (22) zu transportieren und das Rohmaterial (M), unter Verwendung der Wärme (6), in das Produkt (P) und in Kohlendioxid enthaltendes Austrittsgas (G3) umzuwandeln.
- wobei die Vorrichtung (1) einen Gasauslass (11) umfasst, der konfiguriert ist, um ein Abgas (G5) umfassend das Austrittsgas (G3) und das Verbrennungsgas (G4) aus dem Drehrohrofen (2) zu entfernen,
- **dadurch gekennzeichnet, dass** die Kühleinheit (4) konfiguriert ist, um ein Kühlgas (G6) in Prozessrichtung (x) über das Produkt (P) zu leiten, wobei die Kühleinheit ein Rotationskühler ist.

2. Vorrichtung (1) nach Anspruch 1, **dadurch gekennzeichnet, dass** die Vorrichtung (1) ferner einen oder mehrere Ventilatoren (7, 8) umfasst, die konfiguriert sind, um das Kühlgas (G6) in der Prozessrichtung (x) durch die Kühleinheit (4) zu transportieren.

3. Vorrichtung (1) nach Anspruch 1 oder 2, **dadurch gekennzeichnet, dass** die Kühleinheit (4) über eine Verbindungseinheit (40) mit dem zweiten Drehrohrofenende (22) verbunden ist.

4. Vorrichtung (1) nach einem der Ansprüche 1 bis 3, **dadurch gekennzeichnet, dass** die Kühleinheit (4) und der Drehrohrofen (2) so ausgestaltet sind, dass der durch die Kühleinheit (4) führende Abschnitt der Prozessrichtung (x) und der durch den Drehrohrofen führende Abschnitt der Prozessrichtung (x) relativ zueinander in einem Winkel α von 90° oder weniger als 90° angeordnet sind.

5. Vorrichtung (1) nach einem der Ansprüche 1 bis 4, **dadurch gekennzeichnet, dass** eine Vorwärmeinheit (9) zum Vorwärmen des Rohmaterials (M) stromaufwärts des Drehrohrofens (2), bezogen auf die Prozessrichtung (x), angeordnet ist.

6. Vorrichtung (1) nach Anspruch 5, **dadurch gekennzeichnet, dass** die Kühleinheit (4) mit der Vorwärmeinheit (9) verbunden ist, wobei die Vorwärmeinheit (9) konfiguriert ist, um zumindest einen Teil des Kühlgases (G6) von der Kühleinheit (4) aufzunehmen.

7. Verfahren zur Herstellung eines Produkts (P) aus einem Rohmaterial (M), wobei eine Prozessrichtung (x) vorgesehen ist, die durch einen Drehrohrofen (2) von einem ersten Drehrohrofenende (21) zu einem zweiten Drehrohrofenende (22) und weiter durch eine mit dem zweiten Drehrohrofenende (22) verbundene Kühleinheit (4) führt, wobei die Kühleinheit (4) ein Rotationskühler ist, wobei das Verfahren folgende Schritte umfasst:
- Entzünden eines brennbaren Materials (G1) mit einem Zündgas (G2), das mindestens 50 Vol.-% Sauerstoff enthält, in einer am zweiten Drehrohrofenende (22) angeordneten Brenneinheit (5), um Wärme (6) im Inneren des Drehrohrofens (2) zu erzeugen und ein Kohlendioxid enthaltendes Verbrennungsgas (G4) zu erzeugen,
- Aufnehmen des Rohmaterials am ersten Ende (21) des Drehrohrofens und Transportieren des Rohmaterials (M) in Prozessrichtung (x) zum zweiten Ende (22) des Drehrohrofens,
- Herstellen des Produkts (P) im Drehrohrofen (2) durch Sintern und/oder Kalzinieren des Rohmaterials (M) unter Verwendung der Wärme (6), wobei ein Kohlendioxid enthaltendes Austrittsgas (G3) aus dem Rohmaterial (M) austritt,
- Transportieren des Produkts (P) in und durch die Kühleinheit (4) in Prozessrichtung (x);
- Kühlen des Produkts (P) in der Kühleinheit (4) unter Verwendung eines Kühlgases (G6);
- Entnehmen des Produkts (P) aus der Kühleinheit (4);
- das Verfahren weiters umfassend den Schritt des Entfernens eines Abgases (G5), das das Verbrennungsgas (G4) und das Austrittsgas (G3) umfasst, über einen Gasauslass (11) aus dem Drehrohrofen (2);
- wobei das Kühlgas (G6) in Prozessrichtung (x) über das Produkt (P) geleitet wird.

8. Verfahren nach Anspruch 7, **dadurch gekennzeichnet, dass** das Rohmaterial (M) ein oder mehrere anorganische Carbonate umfasst, wobei das eine oder die mehreren anorganischen Carbonate vorzugsweise ausgewählt sind aus der Gruppe bestehend aus Magnesiumcarbonat, Calciumcarbonat, Magnesium-Calciumcarbonat, Magnesium-Calciumcarbonat umfassend Magnesiumoxid, und Mischungen davon.

9. Verfahren nach Anspruch 7 oder 8, **dadurch gekennzeichnet, dass** das brennbare Material (G1) im Wesentlichen aus Erdgas besteht.

10. Verfahren nach einem der Ansprüche 7 bis 9, **dadurch gekennzeichnet, dass** das Zündgas (G2) mindestens 80 Vol.-% Sauerstoff, vorzugsweise mindestens 90 Vol.-% Sauerstoff, noch bevorzugter mindestens 95 Vol.-% Sauerstoff umfasst.

11. Verfahren nach einem der Ansprüche 7 bis 10, **dadurch gekennzeichnet, dass** das Abgas (G5) mindestens 70 Vol.-% Kohlendioxid, vorzugsweise mindestens 80 Vol.-%, noch bevorzugter mindestens 85 Vol.-% Kohlendioxid umfasst.

12. Verfahren nach einem der Ansprüche 7 bis 11, **dadurch gekennzeichnet, dass** das Kühlgas (G6) Luft ist.

13. Verfahren nach einem der Ansprüche 7 bis 12, **dadurch gekennzeichnet, dass** das Rohmaterial (M) in einer Vorwärmeinheit (9), die in Bezug auf die Prozessrichtung (x) stromaufwärts des Drehrohrofens (2) angeordnet ist, vorgewärmt wird, vorzugsweise unter Verwendung von Kühlgas (G6) aus der Kühleinheit (4).

14. Verfahren nach einem der Ansprüche 7 bis 13, **dadurch gekennzeichnet, dass** das Abgas (G5) verflüssigt wird, um eine Flüssigkeit zu erhalten, die Kohlendioxid enthält oder im Wesentlichen aus Kohlendioxid besteht.

## Revendications

1. Appareil (1) pour fabriquer un produit (P) à partir d'une matière première (M), ledit appareil (1) comprenant:
- un four rotatif (2) ayant une première terminaison (21) de four rotative et une deuxième terminaison (22) de four rotatif;
- une unité de refroidissement (4) qui est reliée à la deuxième terminaison (22) du four rotative,
- une direction du processus (x) étant prévue qui traverse le four rotatif (2) depuis la première terminaison (21) du four rotatif jusqu'à la deuxième terminaison (22) du four rotatif et qui traverse ensuite l'unité de refroidissement (4),
- l'unité de refroidissement (4) étant configurée pour transporter le produit (P) dans la direction du processus (x) à travers l'unité de refroidissement (4) pour refroidir le produit (P),
- le four rotatif (2) comprenant une unité de combustion (5) à la deuxième extrémité (22) du four rotatif, l'unité de combustion (5) étant configurée pour recevoir un matériau inflammable (G1) et un gaz d'allumage (G2) afin de créer de la chaleur (6) à l'intérieur du four rotatif (2) et de produire un gaz de combustion (G4) contenant du dioxyde de carbone
- le four rotatif (2) étant configuré pour transporter la matière première (M) reçue à la première extrémité (21) du four rotatif dans la direction du processus (x) vers la deuxième extrémité (22) du four rotatif, et, en utilisant la chaleur (6), pour transformer la matière première (M) en le produit (P) et en un gaz résiduel (G3) comprenant du dioxyde de carbone,
- l'appareil (1) comprenant une sortie de gaz (11) configurée pour retirer un gaz d'échappement (G5) comprenant le gaz résiduel (G3) et le gaz de combustion (G4) du four rotatif (2),
- **caractérisé en ce que** l'unité de refroidissement (4) est configurée pour transporter un gaz de refroidissement (G6) dans la direction du processus (x) sur le produit (P), et **en ce que** l'unité de refroidissement est un refroidisseur rotatif.

2. Appareil (1) selon la revendication 1, **caractérisé en ce que** l'appareil (1) comprend en plus un ou plusieurs ventilateurs (7, 8) configurés pour transporter le gaz de refroidissement (G6) dans la direction du processus (x) à travers l'unité de refroidissement (4).

3. Appareil (1) selon la revendication 1 ou 2, **caractérisé en ce que** l'unité de refroidissement (4) est reliée à la deuxième extrémité (22) du four rotative via une unité de raccordement (40).

4. Appareil (1) selon l'une quelconque des revendications 1 à 3, **caractérisé en ce que** l'unité de refroidissement (4) et le four rotatif (2) sont configurés de telle manière que la partie de la direction du processus (x) passant par l'unité de refroidissement (4) et la partie de la direction du processus (x) passant par le four rotatif sont disposées l'une par rapport à l'autre selon un angle α de 90° ou inférieur à 90°.

5. Appareil (1) selon l'une quelconque des revendications 1 à 4, **caractérisé en ce qu'**une unité de préchauffage (9) servant à préchauffer la matière première (M) est située en amont du four rotatif (2) par rapport à la direction du processus (x).

6. Appareil (1) selon la revendication 5, **caractérisé en ce que** l'unité de refroidissement (4) est reliée à l'unité de préchauffage (9), l'unité de préchauffage (9) étant configurée pour recevoir au moins une partie du gaz de refroidissement (G6) provenant de l'unité de refroidissement (4).

7. Procédé de fabrication d'un produit (P) à partir d'une matière première (M), dans lequel une direction du processus (x) est prévue, la direction du processus (x) traversant un four rotatif (2) depuis une première extrémité (21) du four rotatif jusqu'à une deuxième extrémité (22) du four rotatif, et traversant ensuite une unité de refroidissement (4) reliée à la deuxième extrémité (22) du four rotatif
- allumer dans une unité de combustion (5) située à la deuxième extrémité du four rotatif (22) un matériau inflammable (G1) avec un gaz d'allumage (G2), le gaz d'allumage (G2) comprenant au moins 50 % en volume d'oxygène, afin de créer de la chaleur (6) à l'intérieur du four rotatif (2) et de produire un gaz de combustion (G4) contenant du dioxyde de carbone,
- recevoir la matière première (M) à la première extrémité (21) du four rotatif et transporter la matière première (M) dans la direction du processus (x) vers la deuxième extrémité (22) du four rotatif,
- fabriquer le produit (P) à l'intérieur du four rotatif (2) en frittant et/ou en calcinant la matière première (M) à l'aide de la chaleur (6), dans lequel un gaz résiduel (G3) comprenant du dioxyde de carbone se dégage de la matière première (M),
- transporter le produit (P) dans et à travers l'unité de refroidissement (4) dans la direction du processus (x);
- refroidir le produit (P) à l'intérieur de l'unité de refroidissement (4) en utilisant un gaz de refroidissement (G6);
- retirer le produit (P) de l'unité de refroidissement (4);
- dans lequel le procédé comprend en outre l'étape consistant à retirer un gaz d'échappement (G5) comprenant le gaz de combustion (G4) et le gaz résiduel (G3) du four rotatif (2) via une sortie de gaz (11)
- dans lequel le gaz de refroidissement (G6) est dirigé sur le produit (P) dans la direction du processus (x).

8. Procédé selon la revendication 7, **caractérisé en ce que** la matière première (M) comprend un ou plusieurs carbonates inorganiques, de préférence lesdits un ou plusieurs carbonates inorganiques sont choisis dans le groupe constitué par le carbonate de magnésium, le carbonate de calcium, le carbonate de magnésium-calcium, le carbonate de magnésium-calcium comprenant de l'oxyde de magnesium, et leurs mélanges.

9. Procédé selon la revendication 7 ou 8, **caractérisé en ce que** le matériau inflammable (G1) est essentiellement constitué de gaz naturel.

10. Procédé selon l'une quelconque des revendications 7 à 9, **caractérisé en ce que** le gaz d'allumage (G2) comprend au moins 80 % en volume d'oxygène, de préférence au moins 90 % en volume d'oxygène, de préférence encore au moins 95 % en volume d'oxygène.

11. Procédé selon l'une quelconque des revendications 7 à 10, **caractérisé en ce que** le gaz d'échappement (G5) comprend au moins 70 % en volume de dioxyde de carbone, de préférence au moins 80 % en volume, de préférence encore au moins 85 % en volume de dioxyde de carbone.

12. Procédé selon l'une quelconque des revendications 7 à 11, **caractérisé en ce que** le gaz de refroidissement (G6) est de l'air.

13. Procédé selon l'une quelconque des revendications 7 à 12, **caractérisé en ce que** la matière première (M) est préchauffée dans une unité de préchauffage (6) située en amont du four rotatif (2) par rapport à la direction du processus (x), de préférence en utilisant le gaz de refroidissement (G6) provenant de l'unité de refroidissement (4).

14. Procédé selon l'une quelconque des revendications 7 à 13, **caractérisé en ce que** le gaz d'échappement (G5) est liquéfié pour obtenir un liquide comprenant ou consistant essentiellement en dioxyde de carbone.
